# EUROPEAN PATENT SPECIFICATION

(11) **EP 0 416 797 B1**
(45) Date of publication and mention of the grant of the patent: **21.12.1994**
(21) Application number: 90309393.8
(22) Date of filing: 28.08.1990
(51) Int. Cl.: G11B 17/04, G11B 33/08

(54) **Loading apparatus for a disc-shaped record medium**
Ladegerät für plattenförmigen Aufzeichnungsträger
Appareil de chargement de support d'information en forme de disque

(30) Priority: 31.08.1989 JP 225317/89
(43) Date of publication of application: 13.03.1991
(73) Proprietor: SONY CORPORATION, Tokyo (JP)
(72) Inventor: Katsuyuki, Obata, Shinagawa-ku, Tokyo (JP)
(74) Representative: Ayers, Martyn Lewis Stanley

(56) References cited:
- DE-A- 3 505 339
- FR-A- 2 219 487
- US-A- 4 686 594
- PATENT ABSTRACTS OF JAPAN vol. 7, no. 286 (P-244)(1431) 21 December 1983 & JP-A-58161187 (HITACHI) 24 September 1983
- PATENT ABSTRACTS OF JAPAN, vol. 11, no. 383 (P-646) 15 December 1987, & JP-A-62149064 (MATSUSHITA ELECTRIC)

## Description

This invention relates to a loading apparatus for a disc-shaped record medium in which a disc tray, on which the disc-shaped record medium rests is moved between a position in which the record medium is exchanged and a loaded position in which information is read out, or written to the disc, as by a player section. More particularly, it relates to such apparatus which is provided with a vibration suppressing unit for suppressing vibrations of the disc tray when the disc tray has been moved to the loaded position.

There has been proposed a recording and/or reproducing apparatus which uses a disc shaped record medium, such as an optical disc or a magneto-optical disc, occasionally referred to hereinafter simply as a disc, and an optical pickup system.

An example of such a disc recording and/or reproducing apparatus is disclosed in Japanese utility model publication number 48162/1986. With these known apparatus, a disc table on which the disc rests and a disc table adapted to be rotated with the disc is mounted and an optical pickup adapted to be moved between the inner periphery and the outer periphery of the disc are provided on a supporting base member provided within an outer casing. With such apparatus, the disc table and the optical pickup unit are fixed relative to the supporting base member insofar as the axial direction of the disc table is concerned.

This type of the disc recording and/or reproducing apparatus is provided with a loading mechanism provided in turn with a disc tray adapted for transporting the disc between a position outside of the casing and a position registering with the disc table. That is, the disc tray of the loading apparatus, on which the disc rests, is adapted to be moved between a position in which the disc tray protrudes to the outside of the casing and the position in which the disc tray is placed on the disc table. The disc tray is also provided with a disc lifting unit. This lifting unit lifts or lowers the disc relative to the disc tray along the axis of the disc table for preventing the disc from abutting on the disc table or the optical pickup unit during disc transport and for causing the disc to be placed on the disc table when the disc is positioned over the disc table. Thus the disc lifting unit is provided with a disc rest movably supported along the axis of the disc table by the disc tray and adapted to be moved by an actuating unit including a cam plate or the like member.

The disc recording and/or reproducing apparatus is provided with a disc clamping unit supported vertically movably on top of the disc table. This disc clamping unit is so constructed and arranged that, when the disc is placed on the disc table, the clamping unit is moved towards the disc table to clamp the disc in cooperation with the disc table.

For loading the disc in the player section with the aid of the above described disc loading apparatus, the disc tray is moved to the outside of the casing and the disc is placed on the disc rest of the disc tray. The disc tray is then moved into the inside of the casing. At this time, the disc is moved above the disc table while it is supported on the disc rest. When the disc tray is moved until the center of the disc lies on the axis of the disc table, the disc rest is moved towards the disc table so that the disc is placed on the disc table. The disc clamping unit is then moved towards the disc table for clamping the disc between the clamping unit and the disc table. The information signals may be recorded or reproduced in this state on or from the disc by means of the optical pickup unit.

With the disc recording and/or reproducing apparatus, having the above described loading apparatus, the disc tray, the disc rest of the disc lifting unit and the disc clamping unit are positioned in the recording and/or reproducing mode by, for example, abutments on associated positioning elements.

However, the disc tray, disc rest and the disc clamping unit are simply positioned and held by separate locking pawls or the like elements without being secured mechanically. For this reason, the disc tray, the disc rest or the disc clamping unit may be excited into resonant vibration by extraneous vibrations or due to movements of the objective lens in the optical pickup unit as a result of the focusing or tracking servo control operations.

A similar mechanism is shown in US-A-4,631,716 although in this there is a spring mechanism which biases the disc clamping mechanism into place. The other components can still vibrate.

When the components of the disc recording and/or reproducing apparatus are excited in this manner into vibrational movements, these movements may be propagated to the optical pickup unit or the disc to render it difficult to perform satisfactory focusing or tracking servo control operations. As a result, more powerful servo operations become necessary which in turn increases the driving current for the servo operation and fluctuations in the driving currents. The increased level of fluctuations in the drawing current may render the power supply unit provided in the disc recording and/or reproducing apparatus for furnishing the driving current electrically unstable.

The power supply device also furnishes the current necessary for processing the information signals read from the disc or recorded thereon by means of the optional pickup unit. Therefore, when the power supply device is in an unstable state, information signals cannot be recorded or reproduced satisfactorily.

Both JP-A-58/161,187 and US-A-4,686,594 relate to loading mechanisms for cartridge discs. A loading guide slot rotates vertically about one of its ends and may be loaded when in an upper position. The guide slot is pushed down to the playing position by the lid of the casing. Springs provided between the casing and the guide slot both above and below serve to stabilise the slot.

It is a principal object of the present invention to provide a disc loading apparatus in which, when the disc tray adapted to be moved between a position in which the tray protrudes outwardly from the casing of the apparatus to permit disc exchange and the loaded position is in the loaded position, the disc tray is thrust and supported to enable prevention of generation of vibrations during use of the disc.

The present invention provides a loading apparatus for a disc-shaped record medium comprising:
disc transport means including a disc tray adapted to be movable between a first position for exchanging a disc-shaped record medium and a second position for reproducing information from and/or writing information on the record medium by a read and/or write section and
means for suppressing vibrations produced in the disc tray by thrusting said disc tray at said second position;
characterised in that
said vibration suppressing means are adapted for thrusting said disc tray in a direction normal to the directions of movement of said disc tray between said first and second positions.

The invention also provides a recording and/or reproducing apparatus for writing information on and/or reading information from a disc, comprising:
a supporting base member, a disc holding unit,
a disc tray supported by said supporting base member,
a thrusting and supporting unit adapted for thrusting and supporting said disc tray against said supporting base member; characterised by further comprising:
a movable base member on which said disc rests and on which a disc table rotated with said disc is mounted, said movable base member being supported by said supporting base member for movement substantially along the axis of said disc table; and in that
said disc holding unit is mounted in opposition to said disc table and is adapted for clamping said disc in cooperation with said disc table when said table approaches thereto; in that
said disc tray is supported for movement in a direction normal to the axis of said disc table; and in that
said thrusting and supporting unit is adapted for thrusting and supporting said disc tray in a direction normal to the moving direction when said disc tray is moved towards said disc table and said movable base member is moved in a direction of clamping said disc by said disc table and said disc holding unit.

Hence, with the present loading apparatus when the disc recording and/or reproducing apparatus is in the recording and/or reproducing mode and the information signals are recorded and/or reproduced, it is possible to prevent the disc tray from being vibrated due to extraneous vibrations or vibrations caused by the focusing or tracking servo control operations. In addition, with the present loading apparatus, the disc holding unit is not moved and can be fixedly mounted on the chassis so that it can be safeguarded against vibrations in the recording and/or reproducing mode.

In this manner, with the use of the disc loading apparatus of the present invention, it becomes possible to prevent recording and/or reproducing properties of the information signals from being deteriorated due to vibrations of the disc tray or the disc holding unit to realise satisfactory recording and/or reproduction.

The loading apparatus of the present invention may be advantageously employed in car-installed or portable disc recording/reproducing apparatus since the information signals can be recorded and/or reproduced even under the influences of extraneous vibrations.

The invention will be further described by way of non-limitative example with reference to the accompanying drawings, in which:-

Figure 1 is a partially exploded perspective view of an embodiment of the disc loading apparatus according to the present invention.

Figure 2 is an exploded perspective view of the disc loading apparatus shown in figure 1.

Figure 3 is an exploded perspective view of the driving unit of the disc loading apparatus shown in figure 1.

Figure 4 is a side elevation showing a lateral side of the disc loading apparatus shown in figure 1 in the unloaded state, with a portion thereof being broken away.

Figure 5 is a side elevation showing the same lateral side as in figure 4 of the disc loading apparatus shown in figure 1 in the fully loaded state, with a portion thereof being broken away.

Figure 6 is a side elevation showing the lateral side opposite to that of figures 4 or 5 of a thrusting supporting unit of the disc loading apparatus shown in figure 1, with the thrusting supporting unit being shown in the unloaded state and with a portion of the thrusting supporting unit being broken away.

Fig. 7 is a side elevation showing the same lateral side as in Fig. 6 of the thrusting supporting unit in the fully loaded state, with a portion of the unit being broken away.

Fig. 8 is a plan view of the disc loading apparatus shown in Fig. 1 in the unloaded state, with a portion thereof being broken away.

Fig. 9 is a plan view of the disc loading apparatus shown in Fig. 1 , with the apparatus being shown in the course of the loading operation and with a portion thereof being broken away.

Fig. 10 is a plan view showing the disc loading apparatus in the fully loaded state, with a portion thereof being broken away.

Fig. 11 is a side elevation, showing the same lateral side as that in Figs. 6 or 7, of a modified embodiment of a thrusting and supporting unit provided in the disc loading apparatus, with the thrusting and supporting unit being shown in the unloaded state and with a portion thereof being broken away.

Fig. 12 is a side elevation showing the same lateral side as that in Fig. 11, of the modified embodiment of the thrusting and supporting unit in the fully loaded state, with a portion thereof being broken away.

By referring to the drawings, certain preferred embodiments of a disc loading mechanism according to the present invention will be explained in detail.

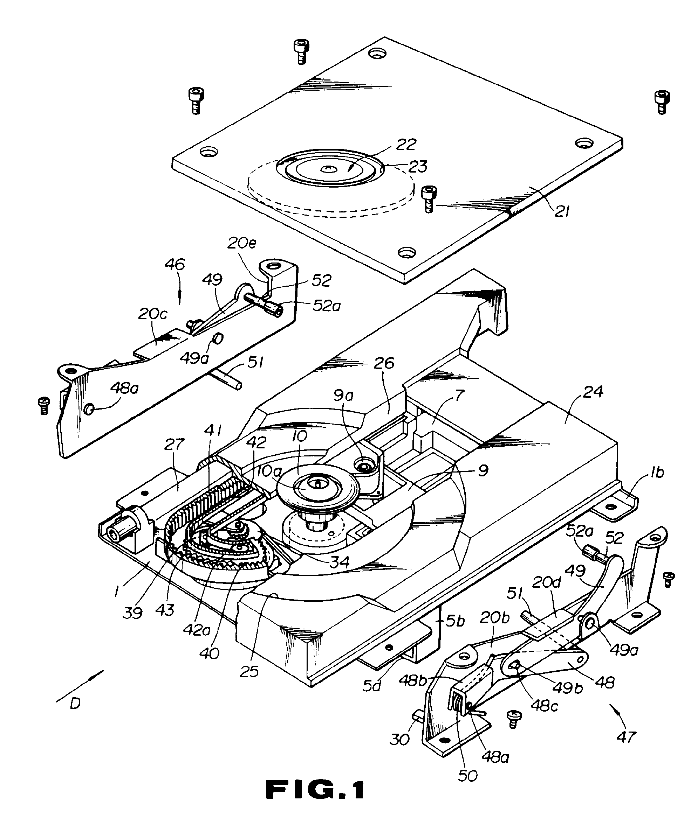

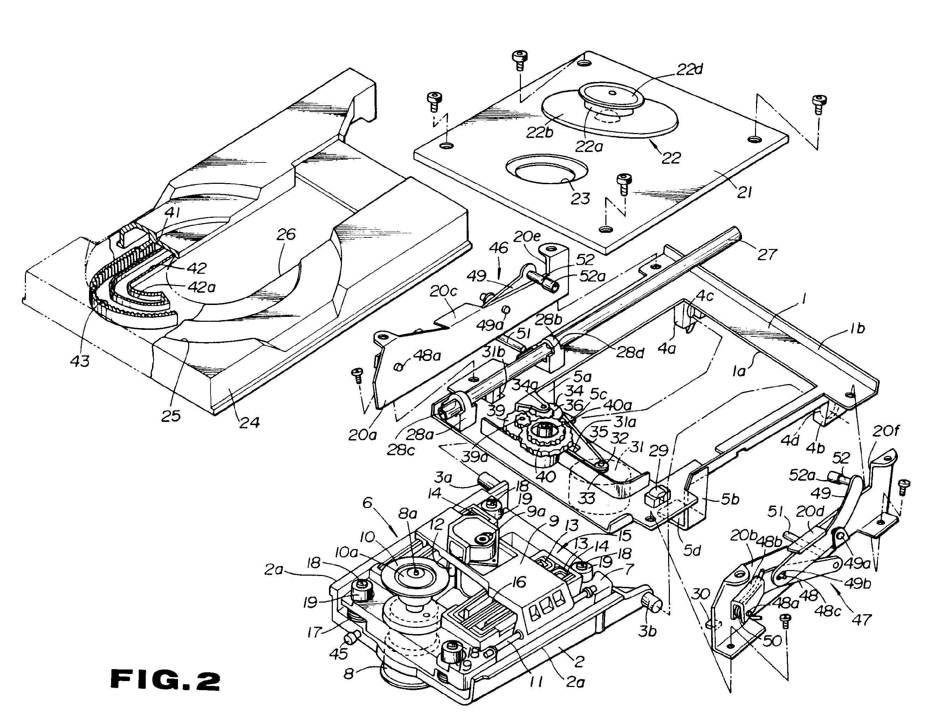

The disc loading mechanism according to the present invention includes, as shown in Figs. 1 and 2, a chassis 1 operating as a supporting base member. This chassis 1 is fixedly provided in an outer casing, not shown, of a disc recording and/or reproducing apparatus, also not shown. This chassis 1 is formed by a metal plate or the like material in the form of a rectangular frame having a substantially rectangular central opening 1a substantially registering with a disc drive unit supporting plate 2 operating as a movable base member. The chassis 1 is formed with an upstanding wall 1b on its rear edge opposite to its forward edge onto which the disc is to be introduced as indicated by an arrow D in Fig. 1.

The disc drive unit supporting plate 2 is formed from suitable synthetic resin and is in the form of a rectangle which is slightly larger in contour than the opening 1a. This disc drive unit supporting plate 2 is supported rotatably with respect to the chassis 1. To this end, both rear sides of the disc drive unit supporting plate 2 is formed with two outwardly projecting pivot shaft 3a, 3b. These pivot shafts 31, 3b accommodated within supporting bores 4c, 4d formed on the opposite inner sides of a pair of supporting projections 4a, 4b depending from both side edges of the lower surface of the chassis 1 at back of the opening 1a. A pair of rotation restricting pawls 5a, 5b are provided on both lateral sides on the lower surface of the chassis 1 ahead of the opening 1a. These pawls 5a, 5b depend from the lower side of the chassis 1 and are bent inwardly at substantially a right angle to form end sections 5c, 5d which face inwardly towards each other. These end sections 5c, 5d face to the lower surface of the disc drive unit supporting plate 2. The disc drive unit supporting plate 2, thus rotatably supported by the chassis 1, may be rotated from a position abutting on the chassis 1 for closing the opening 1a to a position away from the lower surface of the chassis 1 so as to be brought into abutment to with the end sections 5c, 5d of the pawls 5a, 5b.

A disc drive unit 6 is mounted on the upper surface of the disc drive unit supporting plate 2. This disc drive unit 6 has a substantially plate-shaped unitary base member 7 mounting a spindle motor 8 and an optical pickup unit 9.

The spindle motor 8 is mounted at the forward side of the unitary base member 7 so that its motor shaft or spindle shaft 8a is extended in a direction substantially orthogonal to the unitary base member 7, that is in a direction along which the disc drive unit supporting plate 2 may be moved. The above mentioned disc is placed on the upper end of the spindle shaft 8a, on which is also mounted a disc-shaped disc table 10 which is rotationally driven by the spindle motor 8 along with the disc. A boss 10a adapted to be introduced into a chucking opening formed at the center of the disc is formed centrally on the upper surface of the disc table 10.

The optical pickup unit 9 is adapted to irradiate a light beam on the signal recording surface of the disc resting on the disc table 10, by way of an objective lens 9a, and to detect the light beam reflected from the signal recording surface to read out predetermined information signals. This optical pickup unit 9 has a casing which has its one lateral side slidably supported by a bearing shaft 11 mounted on the unitary base member 7. The casing of the optical pickup unit 9 also carries a rotatable guide wheel 12 which is abutted on and supported by a guide section of the unitary base member 7. The optical pickup unit 9 is supported in this manner so that the objective lens 9a may be moved in a direction normal to the spindle shaft 8a, that is in a direction traversing the disc from its inner periphery towards its outer periphery or vice versa. A plurality of coils 16 making up a linear motor unit 15 in cooperation with a plurality of bar-like magnets 13 and yokes 14 mounted on the unitary base member 7 are mounted on the casing of the optical pickup unit 9. The unit 9, thus supported by the bearing shaft 11, may be moved in the aforementioned direction by means of the linear motor unit 15, with the unitary base member 7 supporting the guide wheel 12.

The disc drive unit 6 is supported in, as it were, a floating state, with, respect to the disc driving unit supporting plate 2, by means of four compression coil springs 17. Thus the disc drive unit 6 is supported in such a manner that four supporting pins 18 provided on the upper surface of the disc drive unit supporting plate 2 are introduced into supporting holes 7a at the four corners of the unitary base member 7, retention members 19 are provided at the forward sides of the four supporting pins 18 for inhibiting accidental extrication of the supporting pins 18, and the above mentioned compression coil springs 17 are wrapped about the supporting pins 18 and interposed in this state between the unitary base member 7 and the disc drive unit supporting plate 2.

First and second lateral wall sections 20a, 20b are mounted on both lateral sides on the upper surface of the chassis 1, such as by set screws, not shown. A ceiling plate 21 is also mounted across the upper ends of the first and second wall sections 20a, 20b, such as by set screws, also not shown. Thus the ceiling plate 21 is supported on top of the chassis 1 and at a predetermined spacing from and parallel to the chassis 1.

A disc holding unit 22 adapted to clamp the disc in cooperation with the disc table 10 is mounted on the ceiling plate 21. The disc holding unit 22 is made up of a main body 22a in the form of a cylinder, a disc-holding disc-shaped section 22b provided on the lower end of the main body 22a facing the disc table 10 and larger in diameter than the main body 22a, and a disc-shaped retention section 22c mounted on the upper end of the main body 22a. The retention section 22c is larger in diameter than the main body 22a. A recess 22d for mating with the boss 10a of the disc table 10 is formed at the center on the lower surface of the disc-holding disc-shaped section 22b. The disc holding unit 22 is supported by the ceiling plate 21 for rotation and for vertical movement within a predetermined extent, with the body member 22a loosely fitted into a supporting through-hole 23, which is provided in the ceiling plate 21 at a position facing the disc table 10 so as to be slightly larger in diameter than the main body 22a. A permanent magnet, not shown, is provided within the interior of the main body 22a for magnetically attracting the disc holding unit 22 towards the disc table 10, with the disc-shaped disc holding section 22b abutting on the disc table 10.

A disc tray 24 is supported and mounted on the chassis 1, within a space between the chassis 1 and the ceiling plate 21, for movement in the fore and aft direction. The disc tray 24 is formed as a rectangular plate having a width such that the tray can be inserted between the side wall sections 20a and 20b. A circular recess 25 for snugly receiving the disc is formed on the upper surface of the disc tray 24, and a through-hole 26 is formed for extending from the center towards the rear of the circular recess 25 so that the disc table 10 and the objective lens 9a of the optical pickup unit 9 may directly face the disc. The disc tray 24. The disc tray 24 is supported by the chassis 1 by a supporting shaft 27 mounted on one lateral side of the tray 24 for extending in the fore and aft direction. The supporting shaft 27 is slidably supported by the tray 24 by having its both ends mounted on the lower surface of the disc tray 24 and its mid portion offset from the tray 24 introduced into supporting holes 28c, 28d of disc tray supporting elements 28a, 28b provided on the upper surface on one lateral side of the chassis 1. The disc tray 24 is carried on its other lateral side by a guide roll 29 provided on the forward side of the chassis 1. The movement of the disc tray in a direction away from the chassis 1 is restricted by a retention member 30 provided on the forward inner lateral side of the side wall section 20b at the aforementioned other lateral side.

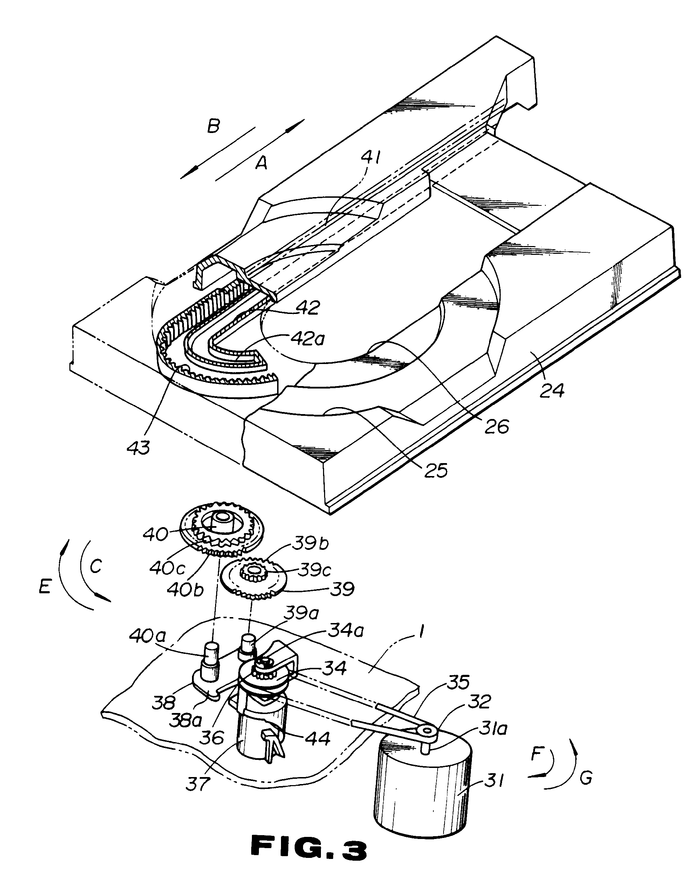

With the above described disc loading mechanism, the disc driving unit 2 and the disc tray 24 are moved under the driving of a driving electric motor 31, which is mounted on the lower surface of the chassis 1 towards the other lateral side of the chassis 1 so that a driving shaft 31a of the motor is extended vertically relative to the chassis 1, as shown in Fig. 2. The distal end of the shaft 31a is extended on the upper side of the chassis 1 by way of a through-hole 33 formed in the chassis 1. A first pulley 32 is mounted at the distal end of the motor shaft 31a, as shown in Figs. 2 and 3. An endless driving belt 35 is placed between the first pulley 32 and a second pulley 34 rotatably supported, by a supporting shaft 34a towards the one lateral side of the chassis 1. The second pulley 34 is formed with a coaxial gear section 36. A cam shaft 37 coaxial with the second pulley 34 and a rotary arm 38 are supported by the supporting shaft 34a for rotation with respect to the chassis 1. The cam shaft 37 and the rotary arm 38 are adapted so as not to rotate relative to each other. The cam shaft 37 depends downwards from the chassis 1, while the rotary arm 38 is disposed on the upper surface of the chassis 1. First and second gear supporting shafts 39a, 40a are mounted vertically on the upper surface of the rotary arm 38. A first speed-reducing transmission gear 39 is rotatably mounted on the first gear supporting shaft 39a. A second speed-reducing transmission gear 40 is rotatably mounted on the second gear supporting shaft 40a. These speed-reducing transmission gears 39, 40 are formed by larger diameter gear sections 39b, 40b and lesser diameter gear sections 39c, 40c formed coaxially and integrally therewith, respectively. These speed-reducing transmission gears 39, 40 are so arranged and constructed that the larger diameter gear section 39b of the first gear 39 meshes with the gear section 36 of the second pulley 34 and the lesser diameter gear section 39b of the first gear 39 meshes with the larger diameter gear section 40b of the second gear 40.

In the state in which the circular recess 25 of the disc tray 24 protrudes towards the forward side of the chassis 1, the lesser diameter gear section 40c of the second speed-reducing transmission gear 40 meshes with a rack gear section 41 formed on the lower surface of the disc tray 24 facing the chassis 1. This rack gear section, 41 is provided on the side of the tray 24 associated with the supporting shaft 27 parallel to the shaft 37 in the fore and aft direction. The lower surface of the disc tray 24 is formed with a guide groove 42 parallel to the rack gear section 41 for engagement by the distal end of the second gear supporting shaft 40a. That is, when the lesser diameter gear section 40c of the second speed-reducing transmission gear 40 meshes with the rack gear section 41, the distal end of the second gear supporting shaft 40a is engaged in the guide groove 42, so that, even if the driving power of the driving motor 31 is transmitted to the speed-reducing transmission gears 39, 40, the rotary arm 38 or the cam gear 37 is not actuated into rotation.

An arcuate internal gear section 43 is formed in continuation to the rack gear section 41 on the forward side of the disc tray 24. An arcuate guide groove section 42a is also formed in continuation to the guide groove 42 on the forward side of the disc tray 24 in association with the internal gear section 43 so as to lie inwardly of the gear section 43. When the disc tray 24 is positioned towards the disc table 10, the gear section 43 and the arcuate guide groove section 42a are on arcs of circles having the supporting shaft 34a as the center.

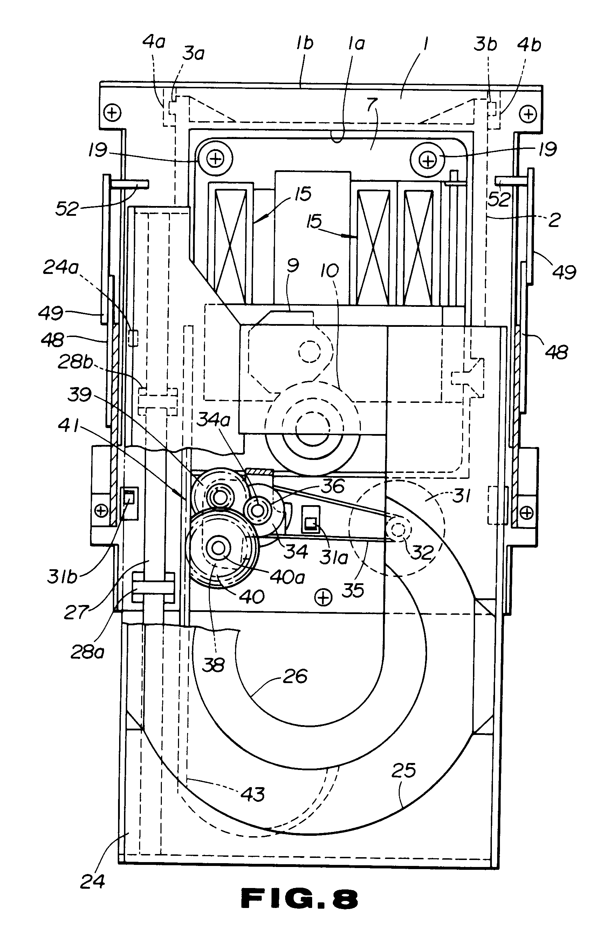

That is, with the lesser diameter gear section 40c of the second speed-reducing gear 40 meshing with the rack gear section 41, as shown in Fig. 8, when the first pulley 32 is rotated by the driving motor 31 in the forward direction as indicated by an arrow F in Fig. 3, the driving power is transmitted to the second speed-reducing transmission gear 40, so that the disc tray 24 is moved towards rear as indicated by an arrow A in Fig. 3. When the first pulley 32 is rotated at this time by the driving motor 31 in the reverse direction as indicated by an arrow G in Fig. 3, the driving power is transmitted to the second speed-reducing transmission gear 40, so that the disc tray 24 is moved forwards, as indicated by an arrow B in Fig. 3.

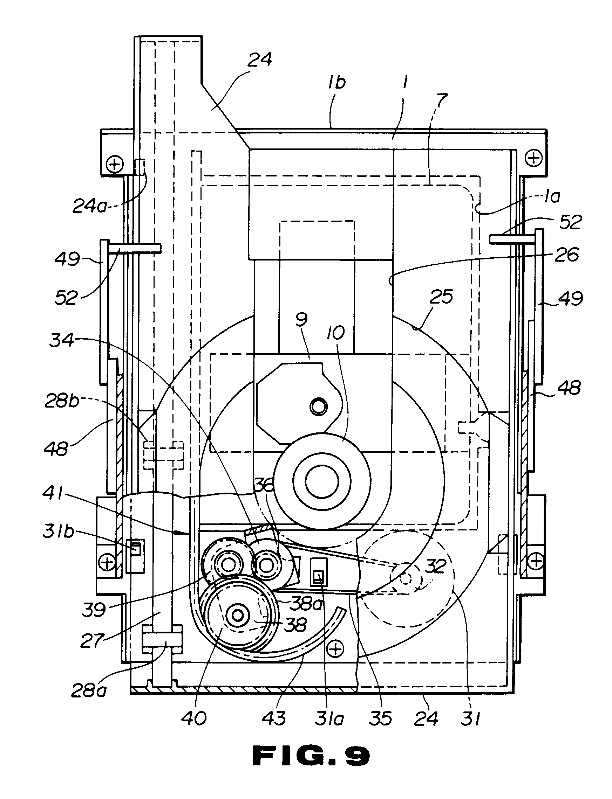

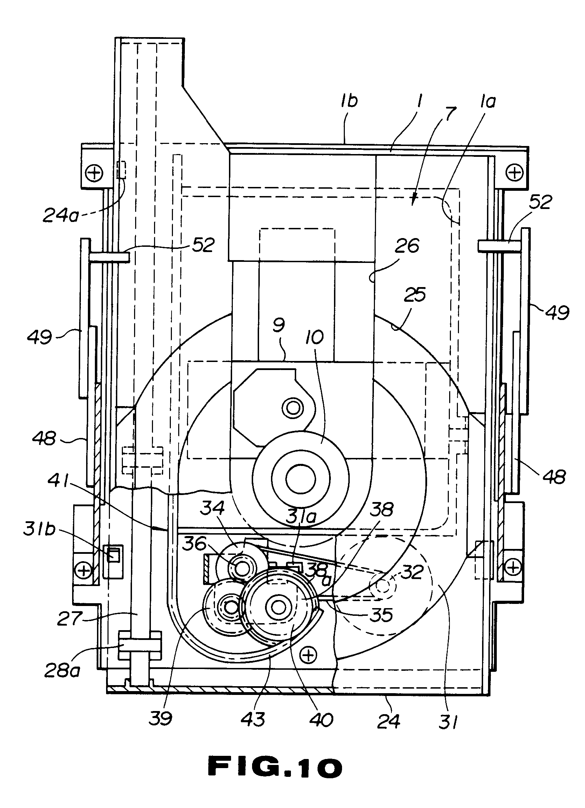

When the disc tray 24 is moved rearwards, that is, towards the disc table 10, as shown in Figs. 9 and 10, and the first pulley 32 is further rotated by the driving motor 31 in the forward direction indicated by an arrow F in Fig. 3, the driving power is transmitted to the second speed-reducing transmission gear 40, with the lesser gear section 40c of the second speed-reducing transmission gear 40 meshing with the internal gear section 43. Simultaneously, the distal end of the second gear supporting shaft 40a is guided by the arcuate guide groove section 42a of the guide groove 42, with the gear section 36 of the second pulley 34 acting as the sun gear and the second speed-reducing transmission gear 40 acting so as planetary gear. Thus the rotary arm 38 and the cam shaft 37 are rotated in the reverse direction as indicated by an arrow C in Fig. 3. On the other hand, when the first pulley 32 is rotated by the driving motor 31 in the reverse direction as indicated by a arrow G in Fig. 3, the gear section 36 of the second pulley 34 acts as the sun gear and the second speed-reducing transmission gear 40 acts as the planetary gear, so that the rotary arm 38 and the cam shaft 37 are rotated in the reverse direction as indicated as an arrow E in Fig. 3.

Meanwhile, when the driving motor 31 is driven in the forward direction and the rotary arm 38 is rotated to a predetermined position in the reverse direction as indicated by an arrow C in Fig. 3, the distal end 38a of the rotary arm 38 abuts on and actuates a first limit switch 31a provided on the chassis 1 to stop the operation of the driving motor 31. On the other hand, when the driving motor 31 is driven in the reverse direction, and the disc tray 24 is moved to a predetermined position towards the forward side as shown by an arrow B in Fig. 3, the projection 24 provided on the rear lower side of the disc tray 24 on its one lateral side abuts on and actuates a second limit switch 31b provided on the chassis 1 to stop the operation of the driving motor 31.

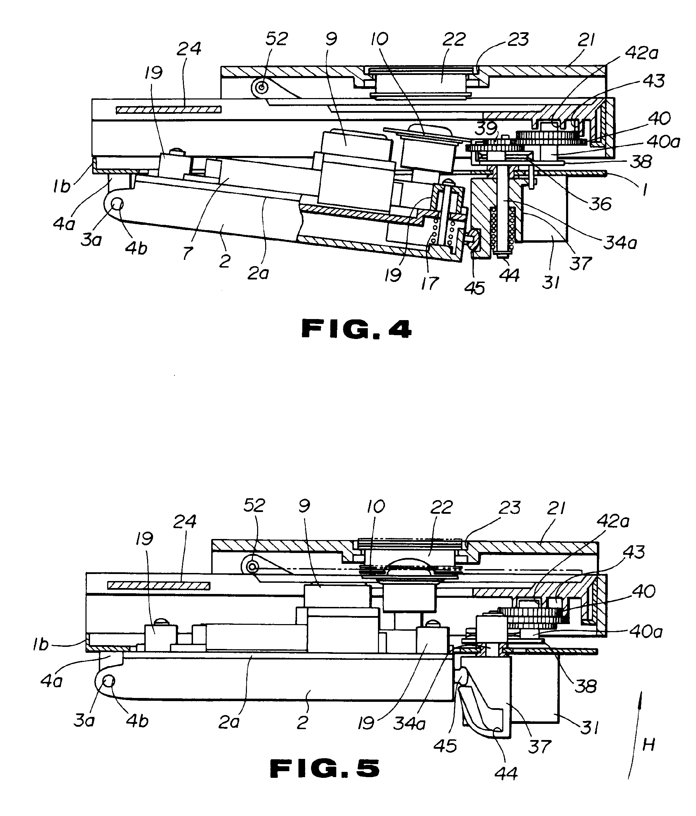

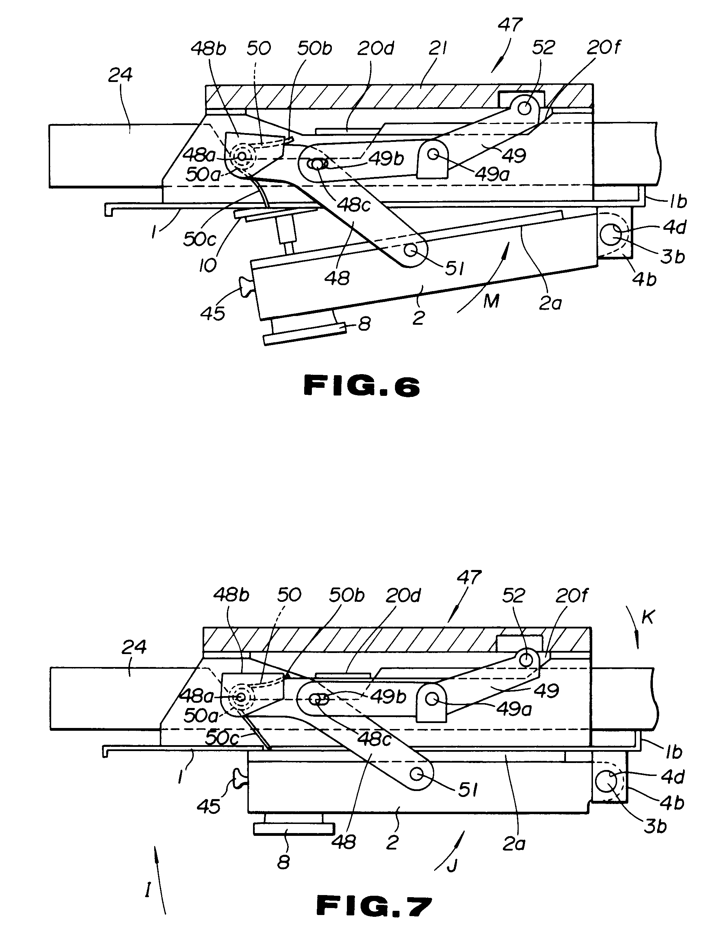

It is noted that a helical cam groove 44 is formed on the outer surface of the cam shaft 37. In this cam groove 44, there is engaged an engaging pin 45 provided on the forward side of the disc drive unit supporting plate 2. Thus, when the cam shaft 37 is rotated in the reverse direction as shown by an arrow C in Fig. 3, with the disc drive unit supporting plate 2 being then spaced apart from the chassis 1, as shown in Fig. 4, the engaging pin 45 is moved along the axis of the cam shaft 37 in a direction towards the chassis 1, with the disc drive unit supporting plate 2 being rotated in a direction of abutting on the chassis 1, as indicated by an arrow H in Fig. 5. At this time, the disc table 10 is at a position substantially abutting on the disc holding unit 22.

On the other hand, when the cam shaft 37 is rotated in the forward direction as indicated by an arrow E in Fig. 3, with the disc drive unit supporting plate 2 then abutting on the chassis 1 as shown in Fig. 5, the engaging pin 45 is moved along the axis of the cam shaft 37 in a direction away from the chassis 1, with the disc drive unit supporting plate 2 being rotated in a direction indicated by an arrow H in Fig. 5, so as to be spaced apart from the chassis, as shown in Fig. 4.

It is noted that, for reducing the friction between the cam shaft 37 and the engaging pin 45, these members are formed of synthetic resin or the like material.

Referring to Figs. 1 and 2, thrusting supporting units 46, 47 are provided on the first and second side wall sections 20a, 20b, respectively. These thrusting supporting units 46, 47 are adapted for thrusting and supporting the disc tray 24 with respect to the chassis 1 in the vertical direction, that is in a direction normal to the moving direction of the disc tray 24, when the disc tray 24 is moved towards the disc table 10, with the disc drive unit supporting plate 2 being turned towards the chassis 1.

Referring to Figs. 6 and 7, each of the thrusting supporting units 46, 47 is constituted by first and second links 48, 49 rotatably supported with respect to the side wall sections 20a, 20b. Each of the first links 48 has its proximal side rotatably supported by a pivot shaft 48a provided on the forward outer surface of the side wall sections 20a, 20b. Actuatable pins 51 are provided on the opposite inner sides on the distal ends of the first links 48, 48. These actuatable pins 51 are positioned below the chassis 1. The distal ends of these actuatable pins 51 face the lower surface of engaging flanges 2a on both lateral edges of the disc drive unit supporting plate 2. These first links 48 are biased into rotation towards above, as indicated by an arrow M in Fig. 6 by a torsion coil spring 50 having its coil sections 50a wrapped around the pivot shafts 48a and having its arm sections 50b, 50c abutting on an abutment member 48b provided on the proximal side of the first link 48 and on the chassis 1, respectively. Hence, when the disc drive unit supporting plate 2 is spaced apart from the chassis 1, as shown in Fig. 6, the distal ends of the actuatable pins 51 are in pressure contact with the lower surfaces of the engaging flanges 2a.

Each of the second links 49 has its intermediate portions rotatably supported by pivot shafts 49a provided on the central outer sides of the side wall sections 20a, 20b. In the one or forward sides of the second links 49 are formed elongated openings 49b in which are engaged, connecting pins 48c provided on the intermediate portions of the first links 48. On the other or rear sides of the second links 49 are thrusting pins 52 which are positioned above the disc tray 24. In the upper portions of the side wall sections 20a, 20b are formed interruptions 20e, 20f by means of which the thrusting pins 52 may directly face the region above the disc tray 24 from outside of these side wall sections 20a, 20b.

With the above described thrusting supporting units 46, 47, when the disc drive unit supporting plate 2 is spaced apart from the chassis 1, the actuatable pins 51 abut on the disc drive unit supporting plate 2, with the first links 48 being turned downwards against the bias of the torsion coil spring 50. Thus the second links 49 are rotated so that the other ends thereof point upwards, with the thrusting pins 52 being spaced apart from the disc tray 24.

When the disc drive unit supporting plate 2 is rotated towards chassis 1, as indicated by an arrow I in Fig. 7, the first links 48 are rotated upwards, as indicated by an arrow J in Fig. 7, under the bias of the torsion coil springs 50, with the second links being turned so that the other ends thereof point downwards, the thrusting pins 52 abutting on the disc tray 24. At this time, the thrusting pins 52 are brought into abutment with the disc tray 24, under the bias of the torsion coil spring 50, for thrusting and supporting the disc tray 24 against the chassis 1. An annular buffer rubber piece 52a is fitted to the distal end of each of the thrusting pins 52 for positively pressing and supporting the disc tray 24 and inhibiting vibrations of the thus supported disc tray.

When the disc tray 24 is thrust and supported by the thrusting supporting units 46, 47, the disc tray 24 has its rear end side supported by and resting on the upper end of the upright rear wall section 1b of the chassis 1, as shown in Fig. 7. That is, the disc tray 24 is supported in stability by the upright wall section 1b guide roll 29 and the disc tray supporting members 28a, 28b.

For loading the disc by the above described disc loading unit of the present invention, the driving motor 31 is driven in the reverse direction and, as shown in Fig. 8, the disc tray 24 is moved forwards so that the circular recess 25 in the disc tray 24 is protruded towards the forward side of the casing of the loading unit. The disc is then correctly placed within the recess 25.

The driving motor 31 is then driven in the forward direction and, as shown in Fig. 9, the disc tray 24 is moved towards the rear, that is towards the disc table 10. Since the disc drive unit supporting plate 2 is spaced apart at this time from the lower surface of the chassis, as shown in Fig. 4, the disc is moved over the disc table 10 and the optical pickup unit 9 without abutting on the disc table 10 or on the optical pickup unit 9. At this time, the state of the thrusting supporting units 46, 47 is such that the thrust pins 52 are spaced apart from the disc tray 24, and hence the disc tray 24 may be moved smoothly.

With further continued rotation of the driving motor 31 in the forward direction, the disc tray 24 is moved until the center of the disc is on the axis of the disc table 10, at which time the disc tray 24 is stopped and, as shown in Fig. 10, the rotary drum 38 and the cam shaft 37 are rotated in the reverse direction. The disc drive unit supporting plate 2 is then rotated towards the chassis 1, as indicated by an arrow H in Fig. 5. In this manner, the disc is clamped between the disc table 10 and the disc holding unit 22. The state of the thrusting and supporting units 46, 47 at this time is such that, as shown in Fig. 7, the thrusting pins 52 are brought into abutment with the disc table 24 for thrusting and supporting the disc tray 24 against chassis 1.

The disc mounted between the disc table 10 and the disc holding unit 22 is actuated into rotation by the spindle motor 8 so that predetermined information signals are written and/or read from or on the disc by means of the pickup unit 9.

With the above described disc recording and/or reproducing apparatus, since the disc tray 24 is thrust and supported against the chassis 1, it becomes possible to prevent vibrations of the disc tray 24 due to extraneous vibration or focusing or tracking servo of causing the objective lens 9a of the optical pickup unit 9 to be shifted during the recording and/or reproducing mode.

For taking out the disc from the disc recording and/or reproducing apparatus it suffices to drive the driving motor 31 in the reverse direction, whereby the disc drive unit supporting plate 2 is separated from the chassis 1 and the disc tray 24 is moved forwards so that the disc may be transported out of the casing.

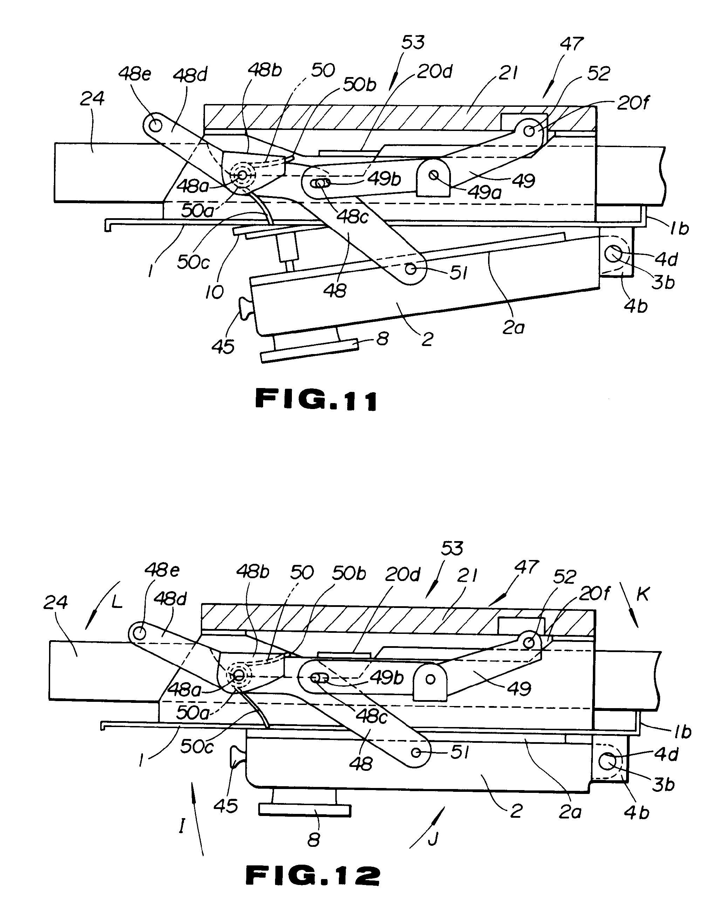

The thrusting and supporting units 46, 47 in the disc loading apparatus of the present invention is not limited to the above described arrangement. Thus, as shown in Figs. 11 and 12, the proximal ends of the first links 48 may be provided with arm sections 48d facing the region above the forward side of the disc tray 24 and forward thrusting pins 48e may be provided on the opposite inner sides of these arm sections 48d.

With the thrusting and supporting unit 53, when the disc drive unit supporting plate 2 has been rotated towards the chassis 1, as shown in Fig. 12, the thrusting pins 52 are brought into abutment with the upper surface of the disc tray 24, under the bias of the torsion coil springs 50, similarly to the thrusting supporting units 46, 47, while the forward thrusting pins 48e of the arm sections 48d is brought into abutment on the forward upper surface of the disc tray 24, as indicated by an arrow L in Fig. 12. Hence, with the thrusting supporting unit 53, the disc tray 24 is acted on by pressure at four points on its upper surface, when the disc drive unit supporting plate 2 has been rotated towards the chassis 1, so that the disc tray 24 may be supported more stably by the chassis 1.

## Claims

1. A loading apparatus for a disc-shaped record medium comprising
disc transport means including a disc tray (24) adapted to be movable between a first position for exchanging a disc-shaped record medium and a second position for reproducing information from and/or writing information on the record medium by a read and/or write section (2,6,7,15) and
means (46,47) for suppressing vibrations produced in the disc tray (24) by thrusting said disc tray (24) at said second position; characterised in that
said vibration suppressing means (46,47) are adapted for thrusting said disc tray (24) in a direction normal to the directions of movement (A,B) of said disc tray (24) between said first and second positions.

2. A loading mechanism according to claim 1 wherein said vibration suppressing means (46,47) are adapted to thrust said disc tray (24) in a direction normal to the direction of movement of said disc tray (24) between said first and second positions in operative association with the relative vertical movement between said disc tray (24) and said read and/or write section (2, 6, 7, 15).

3. A loading mechanism according to claim 1 or 2, wherein said vibration suppressing means (46,47) are adapted to thrust said disc tray (24) in a direction normal to the direction of movement (A,B) of said disc tray (24) by said read and/or write section (2,6,7,15) being rotated relative to said disc tray (24).

4. A loading apparatus according to any preceding claim, wherein said vibration suppressing means (46,47) comprises a first link (48) rotatable by rotation of said read and/or write section (2,6,7,15) and a second link (49) rotatable by rotation of said first link (48) in a direction (K) of thrusting said disc tray (24) for thrusting the disc tray (24) at the free end of the second link (49).

5. A loading apparatus according to any preceding claim, wherein said vibration suppressing means (46,47) comprises a first link (48) rotated by rotation of said read and/or write section (2,6,7,15) for thrusting said disc tray (24) at the free end (48d) of said first link (48) for thrusting said disc tray (24) in a direction normal to the moving directions (A,B) of said disc tray (24), and a second link (49) rotated by rotation of said first link (48) in a direction (K) of thrusting said disc tray (24) for thrusting said disc tray (24) at the free end of the second link (49).

6. A recording and/or reproducing apparatus for writing information on and/or reading information from a disc, comprising:
a supporting base member (1), a disc holding unit (22),
a disc tray (24) supported by said supporting base member (1),
a thrusting and supporting unit (46,47) adapted for thrusting and supporting said disc tray (24) against said supporting base member (1); characterised by further comprising:
a movable base member (2,7) on which said disc rests and on which a disc table (10) rotated with said disc is mounted, said movable base member (7) being supported by said supporting base (1) member for movement substantially along the axis of said disc table (10); and in that
said disc holding unit (22) is mounted in opposition to said disc table (10) and is adapted for clamping said disc in cooperation with said disc table (10) when said table approaches thereto; in that
said disc tray (24) is supported for movement in a direction (A,B) normal to the axis of said disc table (10); and in that
said thrusting and supporting unit (46,47) is adapted for thrusting and supporting said disc tray (24) in a direction normal to the moving direction when said disc tray (24) is moved towards said disc table (10) and said movable base member (2,7) is moved in a direction of clamping said disc by said disc table (10) and said disc holding unit (22).

7. A recording and/or reproducing apparatus according to claim 6 wherein said thrusting supporting unit (46,47) comprises a first link (48) rotatable by movement of said movable base member (2,7) in a direction (I) of clamping said disc and a second link (49) rotatable by rotation of said first link (48) in a direction (K) of thrusting said disc tray for thrusting said disc tray (24) at the free end of the second link (49).

8. Apparatus according to claim 7 wherein a buffer member (52a) is provided at the free end of said second link (49).

9. Apparatus according to claim 6, 7 or 8, wherein said thrusting and supporting unit (46,47) is adapted for thrusting and supporting said disc tray (24) at a plurality of positions.

10. Apparatus according to claim 9, wherein said thrusting supporting unit (46,47) comprises a first link (48) rotatable by movement of said movable base member (2,7) in a direction (I) of clamping said disc for thrusting said disc tray (24) at the free end (48d) of the first link (48) and a second link (49) rotatable by rotation of said first link (48) in a direction (K) of clamping said disc tray (24) for thrusting said disc tray (24) at the free end of the second link (49).

11. Apparatus according to claim 10, wherein buffer members (52a) are provided at the free ends of said first and second links (48,49).

## Patentansprüche

1. Ladegerät für einen plattenförmigen Aufzeichnungsträger, welches umfaßt:
eine Plattentransporteinrichtung, welche eine Plattenlade (24) enthält, die zwischen einer ersten Position zum Wechseln eines plattenförmigen Aufzeichnungsträgers und einer zweiten Position zur Wiedergabe der Information von und/oder zum Schreiben der Information auf dem Aufzeichnungsträger mittels eines Lese- und/oder Schreibteils (2, 6, 7, 15) verschiebbar ist und
Mittel (46, 47) zur Unterdrückung von in der Plattenlade (24) erzeugten Vibrationen durch Schieben der Plattenlade (24) in die zweite Position, dadurch gekennzeichnet,
daß die Vibrationsunterdrückungsmittel (46, 47) zum Schieben der Plattenlade (24) in eine Richtung senkrecht zu den Richtungen der Bewegungen (A, B) der Plattenlade (24) zwischen der ersten und zweiten Position geeignet sind.

2. Lademechanismus nach Anspruch 1, bei dem die Vibrationsunterdrückungsmittel (46, 47) zum Schieben der Plattenlade (24) in eine Richtung senkrecht zur Bewegungsrichtung der Plattenlade (24) zwischen der ersten und zweiten Position in betrieblichem Zusammenhang mit der entsprechenden vertikalen Bewegung zwischen der Plattenlade (24) und dem Lese- und/oder Schreibteil (2, 6, 7, 15) geeignet sind.

3. Lademechanismus nach Anspruch 1 oder 2, bei dem die Vibrationsunterdrückungsmittel (46, 47) geeignet sind, die Plattenlade (24) in eine Richtung senkrecht zur Bewegungsrichtung der Plattenlade (24) zu schieben, indem die Lese- und/oder Schreibgruppe (2, 6, 7, 15) bezüglich der Plattenlade (24) gedreht wird.

4. Lademechanismus nach einem der vorhergehenden Ansprüche, bei dem die Vibrationsunterdrückungsmittel (46, 47) ein erstes Verbindungsstück (48), welches durch Drehung des Lese-und/oder Schreibteils (2, 6, 7, 15) verdrehbar ist, und ein zweites Verbindungsstück (49), welches durch Drehung des ersten Verbindungsstücks (48) in eine Schieberichtung (K) der Plattenlade (24) zum Schieben der Plattenlade (24) zum freien Ende des zweiten Verbindungsstücks (49) verdrehbar ist, umfassen.

5. Lademechanismus nach einem der vorhergehenden Ansprüche, bei dem die Vibrationsunterdrückungsmittel (46, 47) ein erstes Verbindungsstück (48), welches durch Drehung des Lese-und/oder Schreibteils (2, 6, 7, 15) zum Schieben der Plattenlade (24) zum freien Ende (48d) des ersten Verbindungsstücks (48) zum Schieben der Plattenlade (24) in eine Richtung senkrecht zu den Bewegungsrichtungen (A, B) der Plattenlade (24) gedreht wird, und ein zweites Verbindungsstück (49), welches durch Drehung des ersten Verbindungsstücks (48) in eine Schieberichtung (K) der Plattenlade (24) zum Schieben der Plattenlade (24) zum freien Ende des zweiten Verbindungsstücks (49) gedreht wird, umfassen.

6. Aufzeichnungs- und/oder Wiedergabegerät zum Schreiben von Information auf und/oder Lesen von Information von einer Platte, welches umfaßt:
ein Tragbodenteil (1), eine Plattenhalteeinheit (22),
eine Plattenlade (24), welche durch das Tragbodenteil (1) abgestützt wird,
eine Schiebe- und Stützeinheit (46, 47), welche zum Schieben und Abstützen der Plattenlade (24) gegenüber dem Tragbodenteil (1) geeignet ist; dadurch gekennzeichnet, daß es weiterhin umfaßt:
ein bewegliches Bodenteil (2, 7), auf welchem die Platte ruht und auf welchem ein mit der Platte rotierender Plattentisch (10) montiert ist, wobei das bewegliche Bodenteil (7) durch das Tragbodenteil (1) für eine Bewegung im wesentlichen entlang der Achse des Plattentisches (10) abgestützt wird; und bei dem
die Plattenhalteeinheit (22) gegenüber dem Plattentisch (10) montiert ist und zum Einspannen der Platte unter Mitwirkung des des Plattentischs (10), wenn sich der Tisch dazu nähert, geeignet ist; bei dem
die Plattenlade (24) für eine Bewegung in eine Richtung (A, B) senkrecht zu der Achse des Plattentisches (10) abgestützt ist; und bei dem
die Schiebe- und Stützeinheit (46, 47) zum Schieben und Abstützen der Plattenlade (24) in eine Richtung senkrecht zu der Bewegungsrichtung geeignet ist, wenn die Plattenlade (24) auf den Plattentisch (10) zubewegt wird, und das verschiebbare Bodenteil (2, 7) in eine Richtung zum Einspannen der Platte durch Plattentisch (10) und Plattenhalteeinheit (22) bewegt wird.

7. Aufzeichnungs- und/oder Wiedergabegerät nach Anspruch 6, bei dem die Schiebe- und Stützeinheit (46, 47) ein erstes durch die Bewegung des beweglichen Bodenteils (2, 7) in eine Einspannrichtung (I) der Platte verdrehbares Verbindungsstück (48) und ein durch Drehung des ersten Verbindungsstücks (48) in eine Schieberichtung (K) der Plattenlade drehbares zweites Verbindungsstück (49) zum Schieben der Plattenlade (24) zum freien Ende des zweiten Verbindungsstücks (49) umfaßt.

8. Gerät nach Anspruch 7, bei dem an dem freien Ende des zweiten Verbindungsstücks (49) ein Dämpfungsteil (52a) vorgesehen ist.

9. Gerät nach Anspruch 6, 7 oder 8, bei dem die Schiebe- und Stützeinheit (46, 47) zum Schieben und Abstützen der Plattenlade (24) an einer Vielzahl von Positionen geeignet ist.

10. Gerät nach Anspruch 9, bei dem die Schiebe- und Stützeinheit (46, 47) ein erstes Verbindungsstück (48), welches durch die Bewegung des beweglichen Bodenteils (2, 7) in eine Einspannrichtung (I) der Scheibe zum Schieben der Plattenlade zum freien Ende (48a) des ersten Verbindungsstücks (48) drehbar ist, und ein zweites Verbindungsstück (49), welches durch Drehung des ersten Verbindungsstücks (48) in eine Einspannrichtung (K) der Plattenlade (24) zum Schieben der Plattenlade (24) zum freien Ende des zweiten Verbindungsstücks (49) drehbar ist, umfaßt.

11. Gerät nach Anspruch 10, bei dem an den freien Enden des ersten und zweiten Verbindungsstücks (48, 49) Dämpfungsteile (52a) vorgesehen sind.

## Revendications

1. Appareil de chargement de support d'enregistrement en forme de disque comprenant :
un moyen de transport de disque incluant un chariot à disque (24) agencé pour être mobile entre une première position pour changer de support d'enregistrement en forme de disque et une seconde position pour reproduire des informations à partir du et/ou pour écrire des informations sur le support d'enregistrement au moyen d'une unité de lecture et/ou d'écriture (2, 6, 7, 15) ; et,
des moyens (46, 47) pour supprimer les vibrations produites dans le chariot à disque (24) en poussant ledit chariot à disque (24) à ladite seconde position ;
caractérisé en ce que lesdits moyens de suppression des vibrations (46, 47) sont agencés pour pousser ledit chariot à disque (24) dans une direction perpendiculaire aux directions de mouvement (A, B) dudit chariot à disque (24) entre ladite première et ladite seconde position.

2. Mécanisme de chargement selon la revendication 1, dans lequel lesdits moyens de suppression des vibrations (46, 47) sont agencés pour pousser ledit chariot à disque (24) dans une direction perpendiculaire à la direction de mouvement dudit chariot à disque (24) entre ladite première et ladite seconde position en association active avec le mouvement vertical relatif entre ledit chariot à disque (24) et ladite unité de lecture et/ou d'écriture (2, 6, 7, 15).

3. Mécanisme de chargement selon l'une quelconque des revendications 1 et 2, dans lequel lesdits moyens de suppression des vibrations (46, 47) sont agencés pour pousser ledit chariot à disque (24) dans une direction perpendiculaire à la direction de mouvement (A, B) dudit chariot à disque (24) par la rotation de ladite unité de lecture et/ou d'écriture (2, 6, 7, 15) par rapport audit chariot à disque (24).

4. Appareil de chargement selon l'une quelconque des revendications 1 à 3, dans lequel lesdits moyens de suppression des vibrations (46, 47) comprennent une première bielle (48), pouvant être mise en rotation par la rotation de ladite unité de lecture et/ou d'écriture (2, 6, 7, 15), et une seconde bielle (49), pouvant être mise en rotation par la rotation de ladite première bielle (48) dans un sens (K) de poussée dudit chariot à disque (24), pour pousser ce chariot à disque (24) à une extrémité libre de la seconde bielle (49).

5. Appareil de chargement selon l'une quelconque des revendications 1 à 4, dans lequel lesdits moyens de suppression des vibrations (46, 47) comprennent une première bielle (48), tournée par la rotation de l'unité de lecture et/ou d'écriture (2, 6, 7, 15) pour la poussée dudit chariot à disque (24) à l'extrémité libre (48d) de ladite première bielle (48), pour pousser ledit chariot à disque (24) dans une direction perpendiculaire aux directions de mouvement (A, B) dudit chariot à disque (24), et une seconde bielle (49), tournée par la rotation de ladite première bielle (48) dans un sens (K) de poussée dudit chariot à disque (24), pour pousser ledit chariot à disque (24) à l'extrémité libre de la seconde bielle (49).

6. Appareil d'enregistrement et/ou de reproduction pour écrire des informations et/ou lire des informations sur un disque, comprenant :
un élément de support de base (1) ;
une unité de maintien de disque (22) ;
un chariot à disque (24) supporté par ledit élément de support de base (1) ;
une unité de poussée et de support (46, 47) agencée pour pousser et supporter ledit chariot à disque (24) contre ledit élément de support de base (1) ;
caractérisé en ce qu'il comprend en outre :
un élément de base mobile (2, 7) sur lequel repose ledit disque et sur lequel est monté un porte-disque (10) tourné avec ledit disque, ledit élément de base mobile (7) étant supporté par ledit élément de support de base (1) pour un mouvement sensiblement suivant l'axe dudit porte-disque (10) ;
et en ce que
ladite unité de maintien de disque (22) est montée à l'opposé dudit porte-disque (10) et agencée pour bloquer ledit disque conjointement avec ledit porte-disque (10) quand ce porte-disque s'approche de celle-ci ;
ledit chariot à disque (24) est supporté pour un mouvement dans une direction (A, B) perpendiculaire à l'axe dudit porte-disque (10) ;
ladite unité de poussée et de support (46, 47) est agencée pour pousser et supporter ledit chariot à disque (24) dans une direction perpendiculaire à la direction de mouvement, quand ledit chariot (24) est déplacé vers ledit porte-disque (10) et ledit élément de base mobile (2, 7) est déplacé dans une direction de blocage dudit disque par ledit porte-disque (10) et ladite unité de maintien de disque (22).

7. Appareil d'enregistrement et/ou de reproduction selon la revendication 6, dans lequel ladite unité de poussée et de support (46, 47) comprend une première bielle (48), pouvant être mise en rotation par le mouvement dudit élément de base mobile (2, 7) dans un sens (I) de blocage dudit disque, et une seconde bielle (49), pouvant être mise en rotation par la rotation de ladite première bielle (48) dans un sens (K) de poussée dudit chariot à disque, pour pousser ledit chariot à disque (24) à l'extrémité libre de la seconde bielle (49).

8. Appareil selon la revendication 7, dans lequel est prévu un élément tampon (52a) à l'extrémité libre de ladite seconde bielle (49).

9. Appareil selon l'une quelconque des revendications 6, 7 et 8, dans lequel ladite unité de poussée et de support (46, 47) est agencée pour pousser et supporter ledit chariot à disque (24) à une pluralité de positions.

10. Appareil selon la revendication 9, dans lequel ladite unité de poussée et de support (46, 47) comprend une première bielle (48), pouvant être mise en rotation par le mouvement dudit élément de base mobile (2, 7) dans un sens (I) de blocage dudit disque, pour pousser ledit chariot à disque (24) à l'extrémité libre (48d) de la première bielle (48), et une seconde bielle (49), pouvant être mise en rotation par la rotation de ladite première bielle (48) dans un sens (K) de blocage dudit chariot à disque (24), pour pousser ledit chariot à disque (24) à l'extrémité libre de la seconde bielle (49).

11. Appareil selon la revendication 10, dans lequel sont prévus des éléments tampons (52a) aux extrémités libres desdites première et seconde bielles (48, 49).
